(19) Europäisches Patentamt
European Patent Office
Office européen des brevets

(11) **EP 4 679 423 A1**

(12) **EUROPEAN PATENT APPLICATION**

(43) Date of publication:
**14.01.2026 Bulletin 2026/03**

(21) Application number: **24187188.8**

(22) Date of filing: **08.07.2024**

(51) International Patent Classification (IPC):
**G10L 21/0216** (2013.01)  **G10L 15/06** (2013.01)
**G10L 25/30** (2013.01)

(52) Cooperative Patent Classification (CPC):
**G10L 25/30; G10L 15/063; G10L 21/0216;**
H04R 25/507

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **GN Hearing A/S**
**2750 Ballerup (DK)**

(72) Inventor: **SIMPSON, Andrew**
**DK-2750 Ballerup (DK)**

(74) Representative: **Aera A/S**
**Niels Hemmingsens Gade 10, 5th Floor
1153 Copenhagen K (DK)**

(54) **NOISE PREDICTION IN A HEARING SYSTEM AND RELATED METHODS**

(57)    A hearing device, a hearing system, and related methods are disclosed, the hearing device comprising a set of input transducers providing a transducer input, the set of input transducers comprising a first input transducer for provision of a first transducer input signal, wherein the transducer input is based on the first transducer input signal; a processor configured to process the transducer input and provide an electrical output signal based on the transducer input; and a receiver for converting the electrical output signal to an audio output signal, wherein to process the transducer input comprises to process the transducer input for provision of a first input and a second input; apply a neural network to the second input for provision of a second output being a signal that is a prediction of future noise; provide a noise estimate based on the second output; and subtract the noise estimate from a first input magnitude of the first input for provision of a first output, wherein to provide the electrical output signal is based on the first output.

Fig. 1

## Description

The present disclosure relates to a hearing device, a hearing system and related methods including a method of operating a hearing system/hearing device. In particular, training methods, hearing systems, hearing devices and methods with neural network processing of transducer input, e.g. for use in noise cancellation, are presented.

## BACKGROUND

Noise cancellation and speech enhancement continues to attract attention for hearing device manufacturers as being a key issue for users. However, challenges still remain in providing satisfactory removal of background noise and/or enhancement of speech.

## SUMMARY

Accordingly, there is a need for hearing systems, hearing devices and methods with improved noise cancellation and/or improved enhancement of speech.

A computer-implemented method for training a neural network to process as input audio data comprising a plurality of audio magnitude samples, each audio magnitude sample having a plurality of channels obtained from a microphone of a hearing device or an accessory device, and provide as output a prediction of a future noise is provided. The method comprises obtaining a first batch of training data comprising pointers to training data pair locations of training data pairs; obtaining a master neural network, obtaining the master network comprising initializing weights of the master neural network; replicating instances of the master neural network for provision of first intermediate neural networks corresponding to the first batch of training data; performing, based on the first batch of training data, first sequential training with a plurality of training rounds for provision of first trained weights, the plurality of training rounds including a first training round on first weights of each of the first intermediate neural networks for provision of first intermediate weights and a second training round of each of the first intermediate neural networks for provision of second intermediate weights based on the first intermediate weights, wherein the first trained weights are based on the second intermediate weights; determining average first trained weights based on the first trained weights; and determining the neural network based on the average first trained weights.

A hearing device is disclosed. The hearing device comprises a set of input transducers for provision of a transducer input, the set of input transducers comprising a first input transducer for provision of a first transducer input signal, wherein the transducer input is based on the first transducer input signal; a processor configured to process the transducer input and provide an electrical output signal based on the transducer input; and a receiver for converting the electrical output signal to an audio output signal, wherein to process the transducer input comprises to process the transducer input for provision of a first input and optionally a second input; apply a neural network to the second input for provision of a second output being a signal that is a prediction of future noise, e.g. wherein the neural network is a neural network trained by a method for training as disclosed herein; provide a noise estimate based on the second output; and subtract the noise estimate from a first input magnitude of the first input for provision of a first output, wherein to provide the electrical output signal is based on the first output.

Further, a method of operating a hearing system comprising a hearing device and optionally an accessory device is disclosed. The method comprises obtaining a transducer input; processing the transducer input for provision of an electrical output signal based on the transducer input; and converting the electrical output signal to an audio output signal, wherein processing the transducer input comprises processing a first transducer input of the transducer input for provision of a first input; processing a second transducer input of the transducer input for provision of a second input; applying a neural network to the second input for provision of a second output being a signal that is a prediction of future noise, e.g. wherein the neural network is a neural network trained by a method for training as disclosed herein; providing a noise estimate based on the second output; subtracting the noise estimate from a first input magnitude of the first input for provision of a first output; and providing the electrical output signal based on the first output.

Further, a hearing system comprising a hearing device and an accessory device is disclosed, the hearing system comprising a plurality of processors comprising a hearing processor of the hearing device and an accessory processor of the accessory device, wherein the plurality of processors are configured to obtain a transducer input; process the transducer input for provision of an electrical output signal based on the transducer input; and convert the electrical output signal to an audio output signal, wherein to process the transducer input comprises to process a first transducer input of the transducer input for provision of a first input; process a second transducer input of the transducer input for provision of a second input; apply a neural network to the second input for provision of a second output being a signal that is a prediction of future noise, e.g. wherein the neural network is a neural network trained by a method for training as disclosed herein; provide a noise estimate based on the second output; subtract the noise estimate from a first input magnitude of the first input for provision of a first output; and provide the electrical output signal based on the first output.

It is an advantage of the present disclosure that improved and computing-cost-effective noise cancellation is provided. Further, low-latency processing with improved sound quality is provided.

BRIEF DESCRIPTION OF THE DRAWINGS

The above and other features and advantages of the present invention will become readily apparent to those skilled in the art by the following detailed description of exemplary embodiments thereof with reference to the attached drawings, in which:

Fig. 1 is a flow diagram of an exemplary training method according to this disclosure,

Fig. 2 is a flow diagram of an exemplary training method according to this disclosure,

Fig. 3 is a flow diagram of an exemplary sequential training according to this disclosure,

Fig. 4 schematically illustrates an exemplary hearing device according to this disclosure,

Fig. 5 schematically illustrates an example processor of a hearing device according to this disclosure,

Fig. 6 is a flow diagram of an exemplary method according to this disclosure,

Fig. 7 schematically illustrates an example normaliser according to the present disclosure,

Fig. 8 shows and example neural network,

Fig. 9 schematically illustrates example processors according to this disclosure,

Fig. 10 schematically illustrates an example hearing device according to this disclosure,

Fig. 11 schematically illustrates an example hearing device according to this disclosure,

Fig. 12 illustrates an example hearing system, and

Fig. 13 schematically illustrates example processors according to this disclosure.

DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A training method is disclosed, wherein the training method is a computer-implemented method for training a neural network to process as input audio data comprising a plurality of audio magnitude samples, each audio magnitude sample having a plurality of channels obtained from a microphone of a hearing device or an accessory device, and provide as output a prediction of a future noise.

The method comprises obtaining a first batch of training data also denoted BTD_1. The BTD_1 may comprise M_1 pointers to training data pair locations of training data pairs and/or M_1 training data pairs, wherein M_1 is the number of training data pairs of the BTD_1. The BTD_1 may be selected from one or more large audio files comprising one or more batches of training data, such as a plurality of batches of training data.

A training data pair may comprise a training input and a training output (target). The training input and the training output of a training pair may be shifted in time according to a time shift parameter. For example, the training input may be shifted back in relation to the training output and/or the training output may be shifted forward in relation to the training input. Thereby, the output of the model may be able to estimate future noise. In one or more examples, the time shift parameter may be based on one or more delays in the hearing device and/or the accessory device, such as computational delays and/or transmission delays. In one or more examples, the time shift parameter may be in the range from 10 ms to 500 ms, such as from 20 ms to 200 ms, such as less than 100 ms. In one or more examples, the time shift parameter may be in the range from 200 ms to 500 ms.

The training input may represent a mixture of noise and other audio, such as voice, music, and/or other audio types relevant for the noise cancellation. The training output may represent future noise (e.g. the noise shifted with a time shift parameter) associated with the training input.

The training method comprises obtaining a master neural network, obtaining the master network optionally comprising initializing weights, e.g. with random weights, of the master neural network.

The training method comprises replicating instances of the master neural network for provision of first intermediate neural networks corresponding to the first batch of training data.

The training method comprises performing, based on the first batch of training data, first sequential training with a plurality of training rounds for provision of first trained weights, the plurality of training rounds including a first training round on first weights of each of the first intermediate neural networks for provision of first intermediate weights and a second training round of each of the first intermediate neural networks for provision of second intermediate weights based on the first intermediate weights, wherein the first trained weights are based on the second intermediate weights;

The training method comprises determining average first trained weights based on the first trained weights.

The training method comprises determining the neural network based on the average first trained weights.

In one or more examples, a computer-implemented method for training a neural network to process as input audio data comprising a plurality of audio magnitude samples, each audio magnitude sample having a plurality of channels obtained from a microphone of a hearing device or an accessory device, and provide as output a prediction of a future noise is disclosed, wherein the method comprises obtaining a first batch of training data comprising pointers to training data pair locations of training data pairs; obtaining a master neural network, obtaining the master network comprising initializing weights of the master neural network; replicating instances of the master neural network for provision of first intermediate neural networks corresponding to the first batch of training data; performing, based on the first batch of training data, first sequential training with a plurality of training rounds for provision of first trained weights, the plurality of training rounds including a first training round on first weights of each of the first intermediate neural networks for provision of first intermediate weights and a second training round of each of the first intermediate neural networks for provision of second intermediate weights based on the first intermediate weights, wherein the first trained weights are based on the second intermediate weights; determining average first trained weights based on the first trained weights; and determining the neural network based on the average first trained weights.

In one or more examples, performing the first training round on first weights of each of the first intermediate neural networks for provision of second intermediate weights comprises determining first gradients for each of the first intermediate neural networks; scaling the first gradients for provision of scaled first gradients; and applying the scaled first gradients to the first weights for provision of the first intermediate weights.

In one or more examples, performing the second training round of each of the first intermediate neural networks for provision of second intermediate weights comprises updating each of the first intermediate neural networks with the first intermediate weights; determining second gradients for each of the updated first intermediate neural networks; scaling the second gradients for provision of scaled second gradients; and applying the scaled second gradients to the first intermediate weights for provision of the second intermediate weights.

In one or more examples, performing, based on the first training data, a first sequential training comprises performing at least five training rounds. The number of training rounds in a sequential training is also denoted NTR_SQT and may be at least 2, such as 2, 3, 4, 5 or more. In one or more examples, NTR_SQT = 10. The training rounds may be indexed with index p, where p= 1, 2, 3, ..., NTR_SQT. Performing sequential training is optionally based on consecutive training data elements.

In one or more examples, the method comprises providing second intermediate neural networks with second weights based on the average first trained weigths; obtaining a second batch of training data comprising pointers to training data pair locations of training data pairs; performing, based on the second batch of training data, second sequential training with a plurality of training rounds for provision of second trained weights, the plurality of training rounds including a first training round on second weights of each of the second intermediate neural networks for provision of first intermediate weights and a second training round of each of the second intermediate neural networks for provision of second intermediate weights based on the first intermediate weights, wherein the second trained weights are based on the second intermediate weights; and determining average second trained weights based on the second trained weights, wherein determining the neural network based on the average first trained weights comprises determining the neural network based on the average second trained weights.

In one or more examples, the number of first intermediate neural networks also denoted M_1 is at least 20, such as in the range from 50 to 300, e.g. 100 or 128.

In general, the number of intermediate neural networks also denoted M_i is at least 20, such as in the range from 50 to 300, e.g. 100 or 128.

A hearing device is disclosed. The hearing device may be configured to be worn at an ear of a user and may be a hearable or a hearing aid, wherein the processor is configured to compensate for a hearing loss of a user.

In some examples, the hearing device may be an earbud, a headphone, or a hearing aid, etc.

The hearing device may be a hearing aid of the behind-the-ear (BTE) type, in-the-ear (ITE) type, in-the-canal (ITC) type, receiver-in-canal (RIC) type, receiver-in-the-ear (RITE) type or microphone-and-receiver-in-the- ear (MaRIE) type. The hearing device may be a binaural hearing aid in a binaural hearing system. The binaural hearing system may comprise a first hearing aid and a second hearing aid, wherein the first hearing aid and/or the second hearing aid may be the hearing device(s) as disclosed herein.

The hearing device may be configured for wireless communication with one or more devices, such as with another hearing device, e.g. as part of a binaural hearing system, and/or with one or more accessory devices, such as a smartphone and/or a smart watch. Accordingly, the hearing device may comprise a transceiver module. The hearing device/transceiver module optionally comprises an antenna for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another hearing device, e.g. as part of a binaural hearing system, and/or from one or more accessory devices.

The hearing device/transceiver module optionally comprises a radio transceiver coupled to the antenna for converting the antenna output signal to a transceiver input signal/transceiver input data. Wireless signals from different external sources may be multiplexed in the radio transceiver to a transceiver input signal or provided as separate transceiver input signals on separate transceiver output terminals of the radio transceiver. The hearing device may comprise a plurality of antennas and/or an antenna may be configured to be operate in one or a plurality of antenna modes. The transceiver input signal optionally comprises a first transceiver input signal representative of the first wireless signal from a first external source.

The hearing device comprises a set of input transducers, such as microphones. The set of input transducers may comprise one or more input transducers, e.g., one or more microphones. The set of input transducers comprises a first transducer, such as a first microphone, for provision of a first transducer input signal, such as a first microphone input signal, and/or a second transducer, such as a second microphone, for provision of a second transducer input signal, such as a second microphone input signal. The set of transducers may comprise J transducers for provision of J transducer signals, wherein J is an integer in the range from 1 to 10. In one or more exemplary hearing devices, the number J of transducers is two, three, four, five or more. The set of input transducers may comprise a third transducer, such as a third microphone, for provision of a third transducer input signal.

The hearing device comprises a processor for processing input/input signals, such as transducer input, such as microphone input signal(s), and/or transceiver input. The processor is optionally configured to compensate for hearing loss of a user of the hearing device. The processor is configured to provide an electrical output signal based on the input data/input signals to the processor. For example, a transceiver input terminal of the processor may be connected to a transceiver for receiving transceiver input. One or more transducer input terminals of the processor may be connected to respective one or more input transducers of the set of input transducers.

It is noted that descriptions and features of hearing device or hearing system functionality, such as hearing device configured to, also apply to methods and vice versa. For example, a description of a hearing device configured to determine or process also applies to a method, e.g. of operating a hearing device, wherein the method comprises determining or processing and vice versa.

A hearing device is disclosed. The hearing device comprises a set of input transducers, e.g. a set of microphones, for provision of a transducer input, such as microphone input from one or more microphones. The set of input transducers comprises a first input transducer, such as a first microphone, for provision of a first transducer input signal, such as a first microphone input signal also denoted first microphone input. The set of input transducers may comprise a second input transducer, such as a second microphone, for provision of a second transducer input signal, such as a second microphone input signal also denoted second microphone input. The first microphone input and/or the second microphone input may form at least a part of the microphone input/transducer input. Thus, the transducer input may comprise and/or be based on first microphone input from a first microphone of the hearing device and/or a second microphone input from a second microphone of the hearing device.

The transducer input may for example be obtained, e.g., via the set of input transducers, based on audio. For example, the set of input transducers may be configured to generate, e.g., based on an audio input, transducer input.

The hearing device comprises a processor configured to process the transducer input, such as microphone input, and provide an electrical output signal based on the transducer input, such as based on the microphone input.

In one or more examples, to process the transducer input comprises to process the transducer input, such as a microphone input based on a first microphone input from a first microphone and/or a second microphone input from a second microphone, for provision of a first input and a second input; apply a neural network, such as a neural network trained by a training method as disclosed herein, to the second input for provision of a second output, wherein the second output may be a signal that is a prediction of future noise; provide a noise estimate based on the second output; and subtract the noise estimate from a first input magnitude of the first input for provision of a first output, wherein to provide the electrical output signal is based on the first output.

The hearing device comprises a receiver for converting the electrical output signal to an audio output signal. Alternatively, or in combination with the receiver, transceiver module of hearing device may be configured to transmit a wireless output based on or representative of the electrical output signal.

The transducer input signals, such as microphone input signals, may be pre-processed, e.g. in a pre-processor external to or integrated in the processor, before being processed as transducer input by the processor.

The electrical output signal is for example an electrical output signal of the processor. The electrical output signal can for example be seen as an electrical signal provided by the processor as an output.

The neural network optionally applied by the processor may for example be configured to take the second input as network input. The output of the neural network comprises or is the second output. The second output may be a signal that is a prediction of future noise.

The neural network may be a feedforward deep neural network, such as a vanilla neural network, configured to predict a future noise. The neural network may comprise three or more layers, e.g. including an input layer, one or more hidden layers, and an output layer.

One or more layers, such as the input layer and one or more hidden layers of the neural network, may be implemented as GRU layers.

A dimension of the input layer output may be the same as a dimension of hidden layer(s) and/or the output layer. The output of the input layer may be a 256-channel, 512-channel, a 1024-channel, a 2048-channel, or a 4098-channel output. The output of the (first) hidden layer may be a 256-channel, a 512-channel, a 1024-channel, a 2048-channel, or a 4096-channel output. The output of the output layer, e.g. the second output, may be a 256-channel, a 512-channel, a 1024-channel, a 2048-channel, or a 4096-channel output.

In one or more examples, a hearing device is disclosed, the hearing device comprising a set of input transducers for provision of a transducer input, the set of input transducers comprising a first input transducer for provision of a first transducer input signal, wherein the transducer input is based on the first transducer input signal; a processor configured to process the transducer input and provide an electrical output signal based on the transducer input; and a receiver for converting the electrical output signal to an audio output signal, wherein to process the transducer input comprises to process the transducer input for provision of a first input and a second input; apply a neural network to the second input for provision of a second output being a signal that is a prediction of future noise; provide a noise estimate based on the second output; and subtract the noise estimate from a first input magnitude of the first input for provision of a first output, wherein to provide the electrical output signal is based on the first output.

In one or more examples, to provide the electrical output signal based on the first output comprises to postprocess the first output for provision of the electrical output signal.

In one or more examples, to postprocess the first output comprises to determine a first primary output, wherein to determine a first primary output comprises to determine a first primary output magnitude and combine, e.g. with a combiner, the first primary output magnitude with a first input phase of the first input for provision of the first primary output, wherein to provide the electrical output signal is based on the first primary output.

In one or more examples, to determine a first primary output magnitude comprises to remove negative values from the first output, e.g. by replacing negative values with zeros.

To post-process the first output may comprise to convert the first primary output from frequency domain to time domain, e.g. by applying inverse FFT.

In one or more examples, to postprocess the first output comprises to apply inverse FFT to the first primary output for provision of output samples, wherein to provide the electrical output signal is based on the output samples.

In one or more examples, to process the transducer input for provision of a first input and a second input comprises to accumulate the transducer input, such as first transducer input, in a first buffer with a first buffer size, and to accumulate the transducer input, such as first transducer input and/or second transducer input, in a second buffer with a second buffer size, wherein the first buffer size is smaller than the second buffer size.

The first buffer has a first buffer size of N samples, e.g. where N is in the range from 8 to 1024, such as 16, 32, 64, 128, 256, or 512. In one or more examples, the first buffer has a first buffer size of 1, 2, or 4 samples. In one or more examples, the first buffer has a first buffer size of 64, 128 or 256 samples. The second buffer has a second buffer size of M samples, e.g. where M is larger than N. For example, M may be in the range from 1024 to 8192. In other words, the first buffer size may be smaller than the second buffer size. In one or more examples, the second buffer is an M-sample buffer, e.g. where M is 512, 1024, 2048, or 4096. In one or more examples, M is larger than or equal to 2N or larger than or equal to 4N, such as larger than or equal to 8N. In an example, N=256 and M=2048. A large second buffer size allows for noise prediction further into the future, e.g. allowing to compensate for accumulation delays and/or transmission delays.

In one or more examples, to process the transducer input for provision of a first input and a second input comprises to extract the first input magnitude and/or a first input phase based on the transducer input. In other words, the first input may comprise a first input magnitude and/or a first input phase.

In one or more examples, to process the transducer input for provision of a first input and a second input comprises to determine a second input magnitude based on the transducer input, wherein the second input is based on the second input magnitude. In other words, the second input may comprise or be based on a second input magnitude and optionally a second input phase.

In one or more examples, to process the transducer input for provision of a first input and a second input comprises to normalize the second input magnitude for provision of the second input.

In one or more examples, the second output comprises a second output magnitude and to process the transducer input comprises to postprocess the second output magnitude for provision of the noise estimate.

In one or more examples, to postprocess the second output magnitude comprises to normalise, e.g. based on the second input magnitude and/or the second input phase, the second output magnitude for provision of a second primary output, and to provide the noise estimate based on the second primary output. To normalise the second output magnitude may comprise to apply tether normalisation to the second output magnitude, e.g. based on the second input magnitude and/or an average second input magnitude. In other words, to normalise the second output magnitude may comprise to determine a second primary average of the second output magnitude; determine a second secondary average of the second input magnitude; determine one or more normalisation coefficients based on the second primary average and the second secondary average; and determine the second primary output based on the second output magnitude and the normalisation coefficients. The second primary average may be an element-wise average. The second secondary average may be an element-wise average. The normalisation coefficients may be element-wise normalisation coefficients.

A tether normalisation of a signal B in the present context refers to obtaining normalization coefficients from signal A, such as the second input magnitude, and apply the normalization coefficients to signal B, such as the second output magnitude, where the average in signal B (second output magnitude) is now adjusted to match the average of signal A (second input magnitude). This is done elementwise/channelwise/binwise on the magnitude spectrum, where signal A has spectrum A and signal B has spectrum B.

A first example of calculating the average for each element of spectrum A and spectrum B is to do a running average using an exponential integrator (for the ith element):

$$Avg_i = spectrum_i * \alpha + Avg_i * (1 - \alpha),$$

where $\alpha$ is set to a value, e.g. between 0 and 1, such as 0.01. The value $\alpha$ is set such that it is not fast enough to track the speech envelope but is not so slow as to not change quickly enough to keep up with context. In other words, the value $\alpha$ is tuned for average speech energy. In other words, the elementwise Avg on the left side is the updated average based on the present elementwise spectrum and the previous elementwise Avg on the right side.

A second example of calculating the average for each element of spectrum A and spectrum B is to have a discrete sliding window average, such as:

$$Avg_i = \frac{1}{T} \sum_{t-T}^{t} spectrum_{i,t}$$

where T is the number of previous values of each spectrum that are averaged to get a windowed running average also denoted a sliding window average. T is an integer, e.g. larger than 1.

Avg_A and Avg_B are then calculated for spectrum A and spectrum B, respectively, and then spectrum B is multiplied by (Avg_A / Avg_B) so that spectrum B now has the same average as spectrum A.

In one or more examples, to process the transducer input for provision of a first input and a second input comprises to accumulate the transducer input, such as the first transducer input, in a first buffer, zero-pad the first buffer, e.g. with at least 2N zeros, such as M-N zeros, to provide a first intermediate buffer based on the first buffer, apply a first FFT to the first intermediate buffer, and provide the first input magnitude based on the output of the first FFT. The first intermediate buffer may have the same size as the second buffer.

In one or more examples, to process the transducer input for provision of a first input and a second input comprises to accumulate the transducer input, such as the first transducer input and/or the second transducer input, in a second buffer; apply a second FFT to the second buffer, and provide the second input based on the output of the second FFT. The second buffer has a second buffer size as described earlier.

The present disclosure relates to a hearing system and related method, such as a method of operating a hearing system. The hearing system comprises one or more of a hearing device, such as a hearing device as disclosed herein, and an accessory device, such as a smartphone, tablet computer or smartwatch.

In one or more examples, method of operating a hearing system comprising a hearing device is disclosed, the method comprising obtaining a transducer input; processing the transducer input for provision of an electrical output signal based on the transducer input; and converting the electrical output signal to an audio output signal, wherein processing the transducer input comprises processing a first transducer input of the transducer input for provision of a first input; processing a second transducer input of the transducer input for provision of a second input; applying a neural network to the second input for provision of a second output being a signal that is a prediction of future noise; providing a noise estimate based on the second output; subtracting the noise estimate from a first input magnitude of the first input for provision of a first output; and providing the electrical output signal based on the first output.

The first transducer input may comprise, be, or be based on a first microphone input from a first microphone of a hearing device, and/or the second transducer input may comprise, be, or be based on a second microphone input signal from a second microphone of an accessory device.

In one or more examples, a hearing system comprising a hearing device and an accessory device is disclosed, the hearing system comprising a plurality of processors comprising a hearing processor of the hearing device and an accessory processor of the accessory device, wherein the plurality of processors are configured to obtain a transducer input; process the transducer input for provision of an electrical output signal based on the transducer input; and convert the electrical output signal to an audio output signal, wherein to process the transducer input comprises to process a first transducer input of the transducer input for provision of a first input; process a second transducer input of the transducer input for provision of a second input; apply a neural network, such as a neural network trained by a training method as disclosed herein, to the second input for provision of a second output being a signal that is a prediction of future noise; provide a noise estimate based on the second output; subtract the noise estimate from a first input magnitude of the first input for provision of a first output; and provide the electrical output signal based on the first output.

The neural network may be a multilayer neural network. The neural network may comprise one or more fully connected layers. In one or more examples, the neural network comprises an input layer, one or more hidden layers also denoted intermediate layers, and an output layer. The neural network may comprise one or more, such as a plurality of hidden layers. In one or more examples, the neural network has in the range from 3 to 7 layers. In one or more examples, the neural network is a 3-layer, a 4-layer, or a 5-layer, recurrent neural network. The layer of the neural network can for example be seen as a layer of nodes of the neural network, such as a layer of nodes at a given depth of the neural network.

In one or more examples, the neural network is a multi-layer, recurrent neural network.

The neural network may be a recurrent neural network (RNN). The neural network may comprise one or more gated recurrent unit (GRU) layers, such as one or more GRU Type 1 layers and/or one or more GRU Type 2 layers. The neural network may comprise one or more Long short-term memory (LSTM) layers.

A layer or layers of the neural network, such as one or more or all of the hidden layer(s), may be a GRU layer, such as a GRU type-2 layer or a GRU type-1 layer.

The input layer has a number $IN\_N$ of inputs. The input to the input layer may comprise the second input, such as a 512, 1024, or 2048 channel audio signal, based on the transducer input. In one or more examples, the output also denoted activations of one or more hidden layers and/or the output layer are fed back to the input layer as input to the input layer.

In one or more example hearing devices, the first input transducer is a first microphone for provision of a first microphone input signal as the first transducer input signal. The first input transducer may be a vibration sensor for provision of a vibration input signal as the first transducer input signal. The vibration sensor is optionally configured for receiving body conducted signal from ear canal.

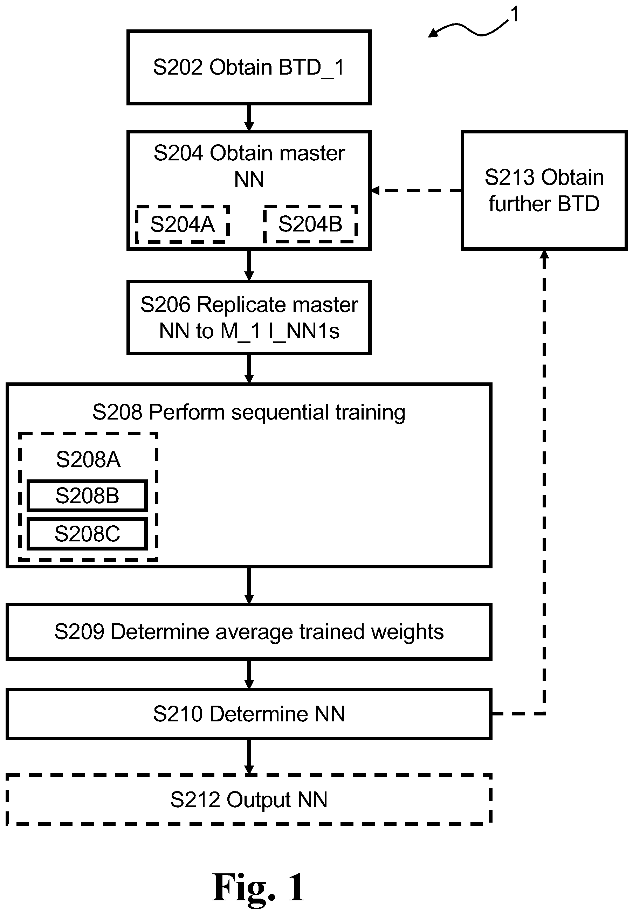

Fig. 1 is a flow diagram of an exemplary training method according to this disclosure. The training method 1 is a computer-implemented method for training a neural network to process as input audio data comprising a plurality of audio magnitude samples, each audio magnitude sample having a plurality of channels obtained from a microphone of a hearing device or an accessory device, and provide as output a prediction of a future noise. The method 1 comprises obtaining S202 a first batch of training data $BTD\_1$ comprising $M\_1=100$ pointers to training data pair locations of training data pairs; obtaining S204 a master neural network, obtaining S204 the master network comprising initializing S204A weights of the master neural network, e.g. via a randomization of the weights $W\_MNN$ of the master neural network; and replicating S206 instances of the master neural network for provision of first intermediate neural networks corresponding to the first batch of training data. In other words, $M\_1$ instances of the master neural network are replicated.

The method 1 proceeds to performing S208 sequential training including performing S208A, based on the first batch of training data $BTD\_1$, first sequential training $ST\_1$ with a plurality of training rounds for provision of first trained weights $T\_W\_1$, the plurality of training rounds including a first training round S208B on first weights of each of the first intermediate neural networks for provision of first intermediate weights $INT\_W\_1$ and a second training round S208C of each of the first intermediate neural networks for provision of second intermediate weights $INT\_W\_2$ based on the first intermediate weights $INT\_W\_1$, wherein the first trained weights $T\_W\_1$ are based on the second intermediate weights $INT\_W\_2$; determining S209 average first trained weights $AV\_T\_W\_1$ based on the first trained weights $T\_W\_2$; and determining S210 the neural network based on the average first trained weights, e.g by applying S210B the average first trained weights $AV\_T\_W\_1$ as weights in the neural network or by obtaining S213 further BTD and updating S204B the master network with the average first trained weights $AV\_T\_W\_1$ and perform one or more further sequential trainings on the further BTD, wherein the master neural network is updated with the average trained weights after each sequential training. In other words, the method 1 may comprise obtaining S213 further batch training data, such as second batch training data $BTD\_2$; updating S204B the master network, and repeat the sequential training of second intermediate neural networks with second weights corresponding to the average first trained weights $AV\_T\_W\_1$ and $BTD\_2$.

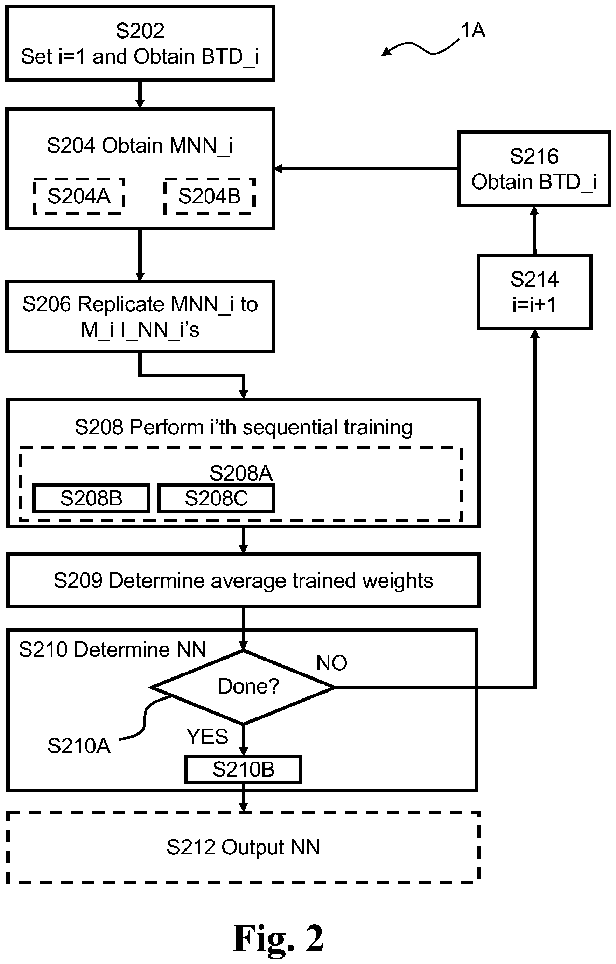

Fig. 2 shows a more detailed and generalized flow diagram of an exemplary training method according to this disclosure. The training method 1A is a computer-implemented method for training a neural network to process as input audio data comprising a plurality of audio magnitude samples, each audio magnitude sample having a plurality of channels obtained from a microphone of a hearing device or an accessory device, and provide as output a prediction of a future noise. The index i indicates an i'th batch of training data/i'th intermediate neural networks of the number of available batches for training.

In method 1A, S202 comprises setting i=1 and obtaining S202A i'th batch of training data BTD_i comprising M_1=100 pointers to training data pair locations of training data pairs.

Obtaining S204 a master neural network comprises obtaining i'th master neural network MNN_i comprising initializing S204A, for i=1, weights of the master neural network, e.g. via a randomization of the weights WMNN of the master neural network or updating S204B, for i>1, the master network with average i-1'th trained weights AV_T_W_i-1 for provision of MNN_i; and replicating S206 instances of MNN_i for provision of i'th intermediate neural networks corresponding to the i'th batch of training data. In other words, M_1 instances of the i'th master neural network are replicated.

The method 1A proceeds to performing S208 i'th sequential training including performing S208A, based on the i'th batch of training data BTD_i, i'th sequential training ST_i with a plurality of training rounds for provision of i'th trained weights T_W_i, the plurality of training rounds including a first training round S208B on i'th weights of each of the i'th intermediate neural networks for provision of first intermediate weights INT_W_1 and a second training round S208C of each of the i'th intermediate neural networks for provision of second intermediate weights INT_W_2 based on the first intermediate weights INT_W_1, wherein the i'th trained weights INI_W_i are based on the second intermediate weights INT_W_2; determining S209 average i'th trained weights AV_T_W_i based on the i'th trained weights T_W_i; and determining S210 the neural network based on the average i'th trained weights, e.g. by applying S210B, if a training stop criterion S210A is satisfied, the average i'th trained weights AV_T_W_i as weights in the neural network or, if a training stop criterion S210A is not satisfied (further batch of training data is available or NN not sufficiently trained), by incrementing S214 index i, obtaining S216 BTD_i, and return to S204.

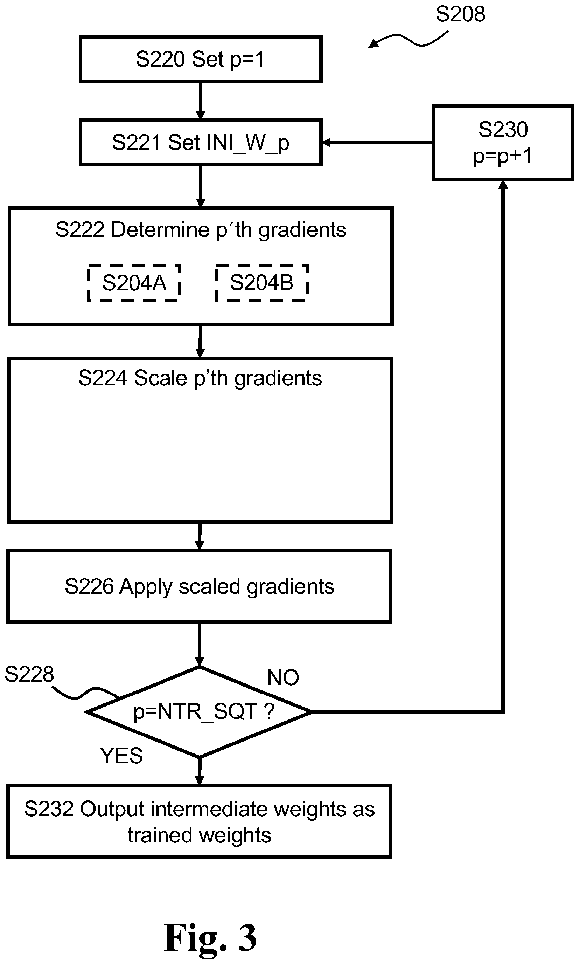

Fig. 3 is a flow chart of an example sequential training, such as performing S208 sequential training. Performing S208 sequential training comprises setting S220 an index p=1 and setting S221 p'th intermediate weights. For example, first intermediate weights (p=1) may be set to the weights of a previously trained network.

Performing S208 sequential training comprises determining S222 p'th gradients for each of the i'th intermediate neural networks; scaling S224 the p'th gradients for provision of scaled p'th gradients; and applying S226 the scaled p'th gradients to the p'th intermediate weights, e.g. by addition, for provision of the intermediate weights for the next training round or for use a trained weights.

In accordance with a determination that the sequential training is not done, e.g. p is less than the number of training rounds in the sequential training, the method proceeds to incrementing S230 p and returning to S221. In accordance with a determination that the sequential training is done, e.g. p equals the number of training rounds, the method proceeds to outputting S232 the p'th intermediate weights as the trained weights.

In one or more examples, determining S222 p'th gradients for each of the i'th intermediate neural networks comprises applying back-propagation gradient descent methods known in the art. Scaling S224 the p'th gradients for provision of scaled p'th gradients may comprise applying a learning rate as known in the art. Applying S226 the scaled p'th gradients to the p'th intermediate weights may comprise updating the weights as known in the art.

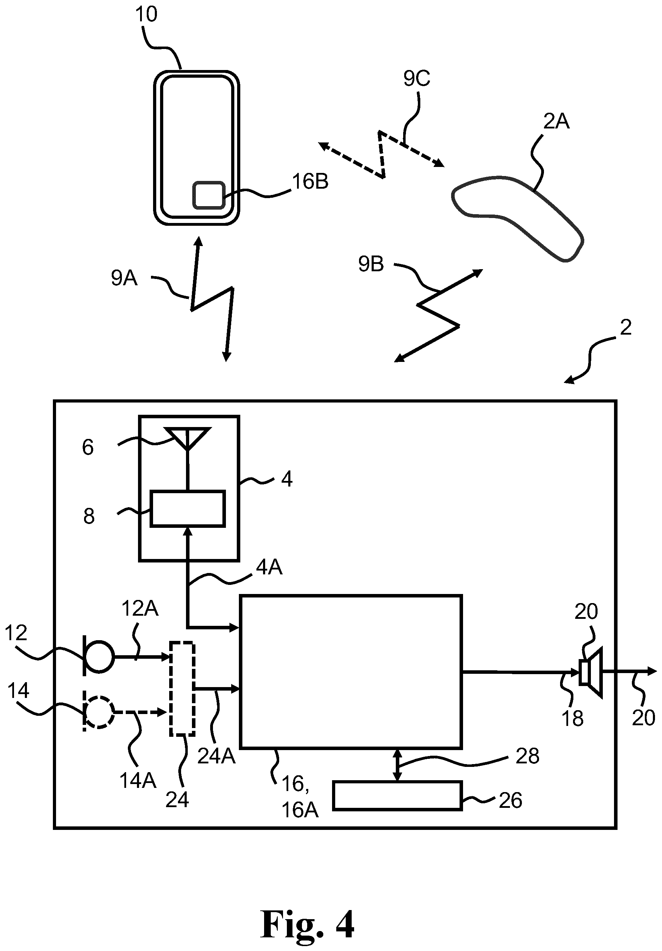

Fig. 4 schematically illustrates a hearing system 1 including an exemplary hearing device 2 according to this disclosure. The hearing device 2 optionally comprises a transceiver module 4 comprising an antenna 6 and a transceiver 8 for wireless communication, e.g. via wireless connections 9A and 9B, such as Bluetooth, with one or more external devices, such as an accessory device 10 (mobile phone, smartphone, tablet computer or smartwatch) and/or another hearing device 2A, e.g. in a binaural hearing system. The transceiver 8 is for example configured to provide transceiver input 4A to a processor 16 of the hearing device 2.

The hearing device 2 comprises a set of input transducers for provision of transducer input, the set of input transducers comprising a first input transducer 12, such as a first microphone as illustrated, for provision of a first transducer input 12A as part of the transducer input. Optionally, the set of input transducers comprises a second input transducer 14, such as a second microphone as illustrated, for provision of a second transducer input 14A as part of the transducer input.

The hearing device 2 comprises processor 16, 16A configured to process the transducer input, such as first transducer input 12A and optionally second transducer input 14A, and providing an electrical output signal 18 based on the transducer input data. Processor 16, 16A is optionally configured to compensate for hearing loss, i.e. the hearing device 2 may be a hearing aid. In one or more examples, the hearing device 2 comprises a receiver 20 for converting the electrical output signal 18 to an audio output signal 22. In one or more examples, the electrical output signal 18 may be output to the transceiver module for transmission to the accessory device 10 and/or hearing device 2A. The hearing device 2, such as the processor 10, optionally comprises a pre-processor 24, e.g. including one or more AD converters and/or one or more filters, for transforming transducer input from input transducers 12, 14 to transducer input 24A. The pre-processor 24 may comprise a beamformer for beamforming the transducer inputs 12A, 14A to a single transducer input 24. In one or more examples, the transducer input 24A comprises first transducer input and second transducer input.

The hearing device 2 comprises a memory 26, for example configured to communicate data 28 with the processor 16 of the hearing device 2.

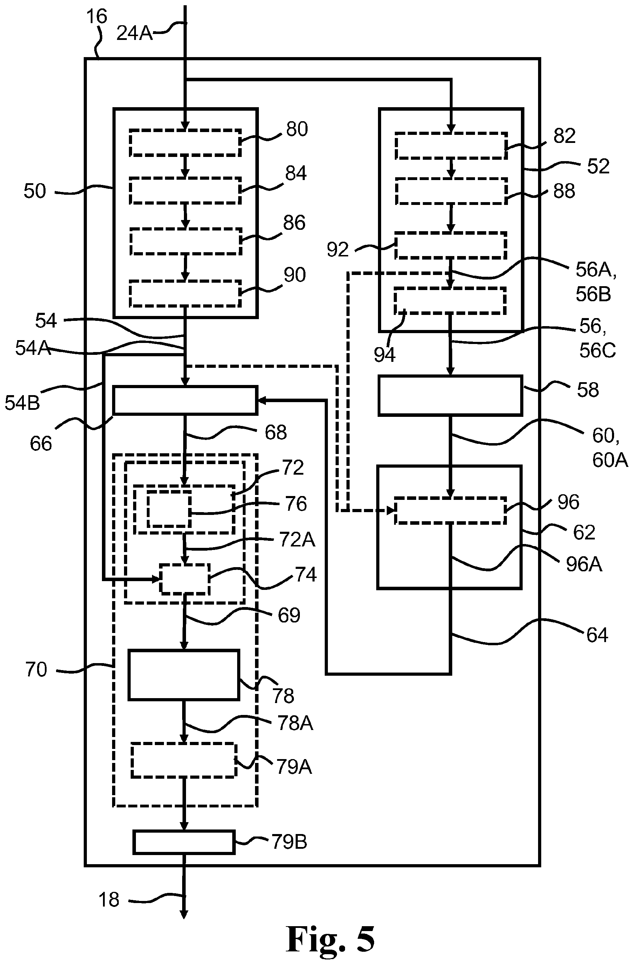

Fig. 5 shows an example processor 16 configured to process the transducer input 24A, such as first transducer input 12A, and provide an electrical output signal 18 based on the transducer input 24A, wherein to process the transducer input comprises to process, e.g. with first processing 50 and second processing 52, the transducer input 24A for provision of a first input 54 and a second input 56. The processor 16 is configured to apply a neural network 58, such as a neural network trained by a training method as disclosed herein, to the second input 56 for provision of a second output 60 being a signal that is a prediction of future noise; provide, with noise estimator 62, a noise estimate 64 based on the second output 60; and subtract, with subtractor 66, the noise estimate 64 from a first input magnitude 54A of the first input 54 for provision of a first output 68, wherein to provide the electrical output signal 18 is based on the first output 68. To provide the electrical output signal 18 based on the first output 68 may comprise to postprocess, e.g. with first postprocessor 70 the first output 68 for provision of the electrical output signal 18.

In processor 16 of Fig. 2, to postprocess the first output 68 comprises to determine a first primary output 69, wherein to determine a first primary output comprises to determine, e.g. with magnitude determiner 72, a first primary output magnitude 72A and combine, e.g. with combiner 74, the first primary output magnitude 72A with a first input phase 54B of the first input 54 for provision of the first primary output 69, wherein to provide the electrical output signal 18 is based on the first primary output 69. To determine a first primary output magnitude 72A may comprises to remove, e.g. in block 76, negative values from the first output 68.

In processor 16, to postprocess the first output comprises to apply inverse Fast Fourier Transform, in frequency-to-time converter 78, to the first primary output for provision of output samples 78A, wherein to provide the electrical output signal is based on the output samples 78A. Optionally, the output samples 78A are truncated to N output samples and optionally processed in overlap-add architecture 79A and fed to an N-sample output buffer 79B.

In example processor 16, to process the transducer input 24A for provision of a first input and a second input comprises to accumulate or buffer the transducer input 24A in a first buffer 80 with a first buffer size. The first buffer has a first buffer size of N samples, e.g. where N is in the range from 64 to 1024, such as 128, 256, or 512. To process the transducer input 24A for provision of a first input and a second input comprises to accumulate the transducer input in a second buffer 82 with a second buffer size. The second buffer has a second buffer size of M samples, e.g. where M is larger than N. In other words, the first buffer size may be smaller than the second buffer size. In one or more examples, the second buffer is an M-sample buffer, e.g. where M is 512, 1024, 2048, or 4096.

The N first samples of the first input buffer 80 are padded with M-N zero's, in block 84, and fed to first time-to-frequency converter 86 for M-point FFT, i.e. conversion from time domain to frequency domain.

The M second samples of the second input buffer 82 are fed to second time-to-frequency converter 88 for M-point FFT, i.e. conversion from time domain to frequency domain.

The zero padding 84 of the first input samples matches the output from the first T/F converter 86 and the second T/F converter 88 to simplify later processing.

The processor 16 comprises first magnitude and phase extractor 90 for provision of first input magnitude 54A and first input phase 54B of the first input 54. Thus, to process the transducer input 24A for provision of a first input 54 and a second input 56 comprises to extract the first input magnitude 54A and a first input phase 54B based on the transducer input 24A.

The processor 16 comprises second magnitude and/or phase extractor 92 for provision of second input magnitude 56A and optionally second input phase 56B. Thus, to process the transducer input 24A for provision of a first input 54 and a second input 56 optionally comprises to determine a second input magnitude 56A based on the transducer input 24A, wherein the second input is based on the second input magnitude.

The processor 16 may comprise second primary normaliser 94 for provision of a normalised second input magnitude 56C based on the second input magnitude 56A. Thus, to process the transducer input 24A for provision of a first input 54 and a second input 56 comprises to normalize the second input magnitude 56A for provision of normalised second input magnitude 56C as the second input 56. In other words, the second input 56 is based on the second input magnitude 56A.

In one or more examples, the second output 60 comprises a second output magnitude 60A, and to process the transducer input 24A comprises to postprocess, e.g. with noise estimator 62, the second output 60, such as the second output magnitude 60A for provision of the noise estimate 64.

In processor 16, to postprocess the second output magnitude 60A may comprise to normalise, e.g. by tether normalisation, the second output magnitude 60A, e.g. with second secondary normaliser 96 for provision of a second primary output 96A as a normalised second output magnitude. The second secondary normaliser 96 is configured to perform a normalisation, such as a tether normalisation, of the second output magnitude.

To postprocess the second output magnitude 60A may comprise to provide the noise estimate 64 based on the second primary output 96A, e.g. by providing the second primary output 96A as the noise estimate 64. The processor 16 may be configured to further post-process the second primary output 96A for provision of the noise estimate.

Thus, in other words to process the transducer input 24A for provision of a first input 54 and a second input 56 may comprise to accumulate or buffer the transducer input, such as N first samples, in a first buffer 80, zero-pad, with block 84, the first buffer with M-N zero's, e.g. to provide an M-sample first intermediate buffer based on the first buffer, apply a first FFT 86, such as an M-point FFT, to the first intermediate buffer, and provide the first input magnitude 54A based on the output of the first FFT 86.

Further, to process the transducer input 24A for provision of a first input 54 and a second input 56 comprises to accumulate or buffer the transducer input, such as M second samples, in a second buffer 82; apply a second FFT 88, such as an M-point FFT, to the M second samples/second buffer 82, and provide the second input 56 based on the output of the second FFT 88.

The processor 16 is optionally configured to perform any of the operations disclosed in Fig. 3, such as any one or more of: S202, S204, S206, S208, S210. The operations of the processor 16 may be embodied in the form of executable logic routines, e.g., lines of code, software programs, etc., that are stored on a non-transitory computer readable medium, e.g., the memory 26, and are executed by the processor 26.

The operations of the hearing device 2/processor 16 may be considered a method that the hearing device 2, such as processor 16, is configured to carry out. Also, while the described functions and operations may be implemented in software, such functionality may as well be carried out via dedicated hardware or firmware, or some combination of hardware, firmware and/or software.

The memory 26 may be one or more of a buffer, a flash memory, a hard drive, a removable media, a volatile memory, a non-volatile memory, a random access memory (RAM), or other suitable device. In a typical arrangement, the memory 26 may include a non-volatile memory for long term data storage and a volatile memory that functions as system memory, such as buffers, for the processor 16. The memory 26 may exchange data with the processor 16 over a data bus (not shown). Control lines and an address bus between the memory 26 and the processor 16 also may be present (not shown in Fig. 1). The memory 26 is considered a non-transitory computer readable medium.

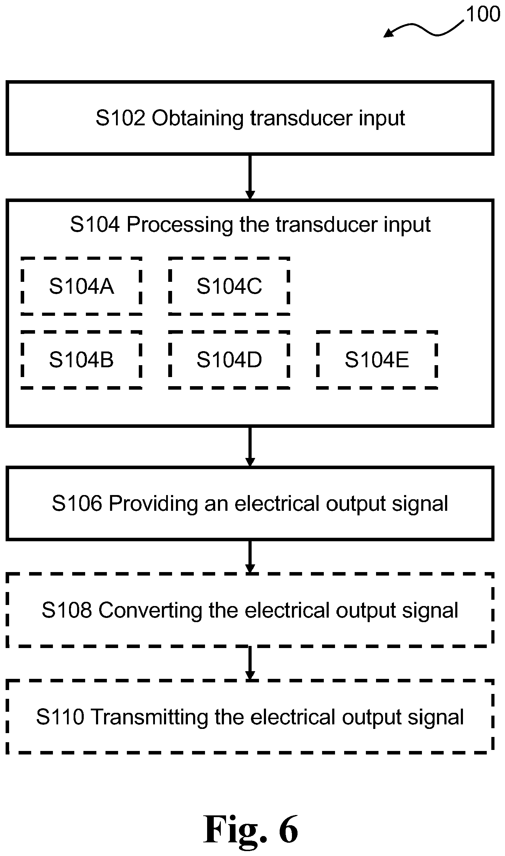

Fig. 6 is a flow diagram of an exemplary method 200 according to this disclosure. The method may be performed by the hearing device, such as using the processor, disclosed herein, such as hearing device 2 and processor 16 of Fig. 4.

The method 200 is a method of operating a hearing device, the method 200 comprising obtaining S202, e.g. with one or more input transducers of the hearing device, a transducer input; processing S204 the transducer input; providing S206 an electrical output signal based on the transducer input; and optionally converting S208 the electrical output signal to an audio output signal. Processing S204 the transducer input comprises processing S204A the transducer input for provision of a first input and/or a second input; optionally applying S204B a neural network, such as a neural network trained by a training method as disclosed herein, to the second input for provision of a second output being a signal that is a prediction of future noise; optionally providing S204C a noise estimate based on the second output; and subtracting S204D the noise estimate from a first input magnitude of the first input for provision of a first output. Providing S206 the electrical output signal is based on the first output. In one or more examples, S204B and S204C may be replaced by obtaining S204E, e.g. from an accessory device, a noise estimate. The method 200 optionally comprises one or more of converting S208, e.g. via a receiver of the hearing device, the electrical output signal to an audio output signal and transmitting S210, e.g. via a transceiver module, the electrical output signal to an accessory device and/or another hearing device.

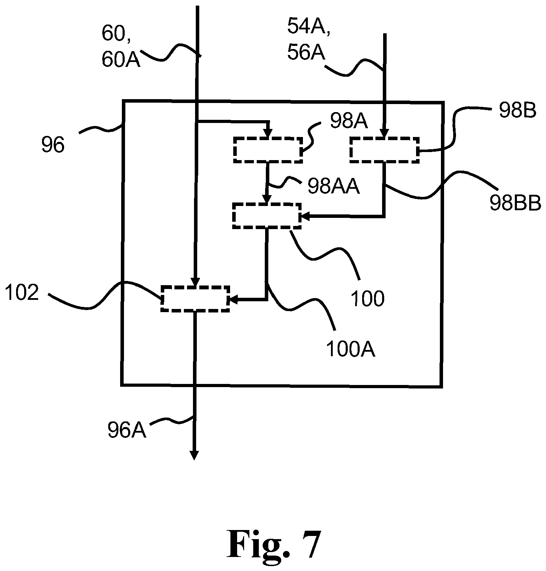

Fig. 7 illustrates an example tether normalisation, e.g. as performed by second secondary normaliser 96 in Fig. 5. The tether normalisation comprises to determine, e.g. with first averager 98A, an element-wise second primary average of the second output magnitude 60A; determine, e.g. with second averager 98B, an element-wise second secondary average of the second input magnitude 56A or the first input magnitude 54A; determine one or more element-wise normalisation coefficients 100A, e.g. with coefficient determiner 100 based on the second primary average 98AA from first averager 98A and the second secondary average 98BB from the second averager 98B; and determine with determiner 102 the second primary output 96A based on the second output magnitude 60A and the normalisation coefficients 100A by dividing second output magnitude 60A and the normalisation coefficients 100A.

Optionally, the first averager 98A determines the second primary average 98AA, e.g. via an exponential integration function or other suitable averaging function, such as a sliding window or running average.

Optionally, the second averager 98B determines the second secondary average 98BB via an exponential integration function.

The present disclosure may allow for improved voice perception and/or stereo stability compared to generative AI used for speech rendering.

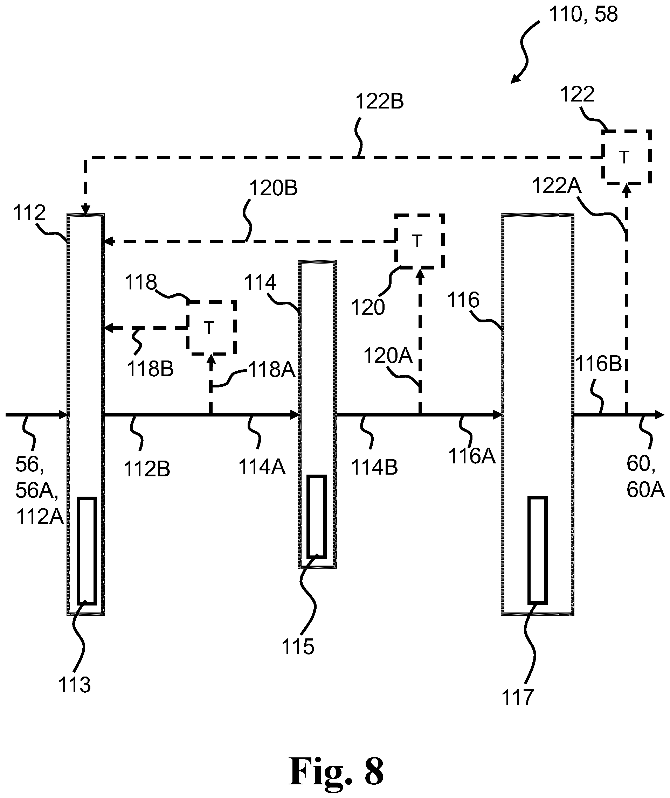

Fig. 8 illustrates an example neural network 110 according to this disclosure, e.g. used as neural network 58, applied to the second input for provision of the second output. The neural network 110 optionally is a neural network trained by a training method as disclosed herein and may be a 3-layer neural network and comprises an input layer 112, a hidden layer 114 also denoted first hidden layer, and an output layer 116. It is to be understood that any of layers 112, 114, 116 may be implemented as a GRU layer or other types of neural network layers. Further hidden layer(s) may be incorporated between hidden layer 114 and output layer 116.

The input layer 112 has the second input magnitude 56A, e.g. 516-channel, 1024-channel, or 2048-channel input, forming at least a part of the input to the input layer 112. In input layer 112, input layer weights 113 are applied to the input layer input 112A for provision of input layer output 112B, e.g. 516-channel, 1024-channel, or 2048-channel output. The input layer output 112B is fed as hidden layer input 114A to the hidden layer 114 and as first feedback input 118A to first feedback element 118. The first feedback element 118 optionally applies feedback and/or delay to the input layer output 112B and feeds first feedback output 118B as part of input layer input 112A to the input layer 112. The first feedback element 118 and functionality thereof may be integrated in the input layer 112, e.g. such that the input layer output 112B is fed directly to the input layer as part of the input layer input 112A.

The hidden layer 114 has the hidden layer output 114B, e.g. 516-channel, 1024-channel, or 2048-channel output, forming at least a part of the input to the output layer 116. In hidden layer 114, hidden layer weights 115 are applied to the hidden layer input 114A for provision of hidden layer output 114B, e.g. 516-channel, 1024-channel, or 2048-channel output. The hidden layer output 114B is fed as output layer input 116A to the output layer 116 and as second feedback input 120A to second feedback element 120. The second feedback element 120 optionally applies feedback and/or delay to the hidden layer output 114B and feeds second feedback output 120B as part of input layer input 112A to the input layer 112. The second feedback element 120 and functionality thereof may be integrated in the input layer 112, e.g. such that the hidden layer output 114B is fed directly to the input layer as part of the input layer input 112A.

The output layer 116 has the output layer output 116B, e.g. 516-channel, 1024-channel, or 2048-channel output, forming the second output 60, such as the second output magnitude 60A. In output layer 116, output layer weights 117 are applied to the output layer input 116A for provision of output layer output 116B, e.g. 516-channel, 1024-channel, or 2048-channel output. The output layer output 116B is fed as third feedback input 122A to third feedback element 122. The third feedback element 122 optionally applies feedback and/or delay to the output layer output 116B and feeds third feedback output 122B as part of input layer input 112A to the input layer 112. The third feedback element 122 and functionality thereof may be integrated in the input layer 112, e.g. such that the output layer output 116B is fed directly to the input layer as part of the input layer input 112A.

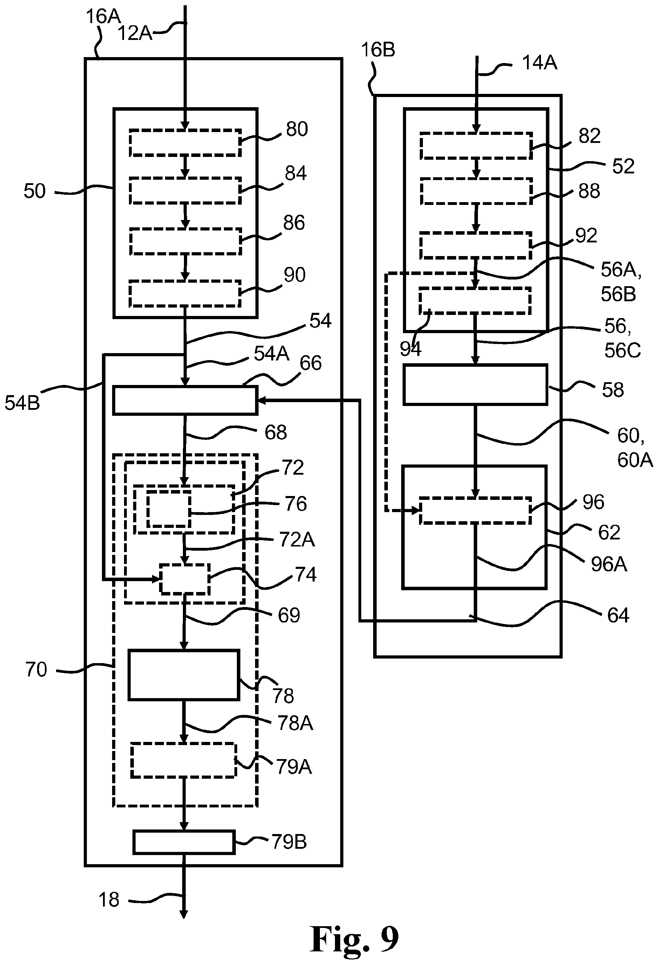

Fig. 9 shows an example implementation with a hearing device processor 16A and an accessory device processor 16B respectively configured to process a transducer input comprising a first transducer input 12A of transducer input and a second transducer input 14A of transducer input. The hearing device processor 16A is configured to provide an electrical output signal 18 based on the transducer input 12A, 14A, wherein to process the transducer input comprises to process, e.g. with first processing 50 and second processing 52, the first transducer input 12A for provision of a first input 54 and to process the second transducer input 14A for provision of a second input 56. The processors 16A, 16B implements the functionality also described in connection with Fig. 5. The noise estimate 64 is transmitted from accessory device to hearing device via wireless transceivers/transceiver modules in hearing device and accessory device (not shown).

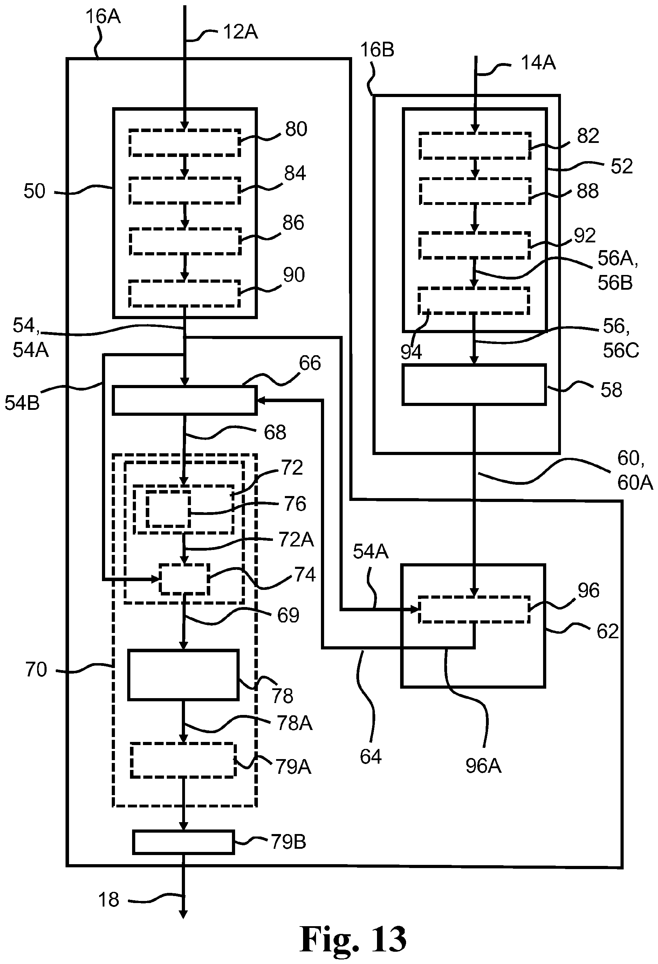

It is to be noted that the tether normalisation in block 96 may be performed in the hearing device as illustrated in Fig. 13, i.e. based on the first input magnitude 54A instead of being based on the second input magnitude 56A. In other words, the second output 60 may be transmitted to the hearing device, the hearing device implementing the noise estimator 62 or parts thereof, such as the second secondary normaliser 96.

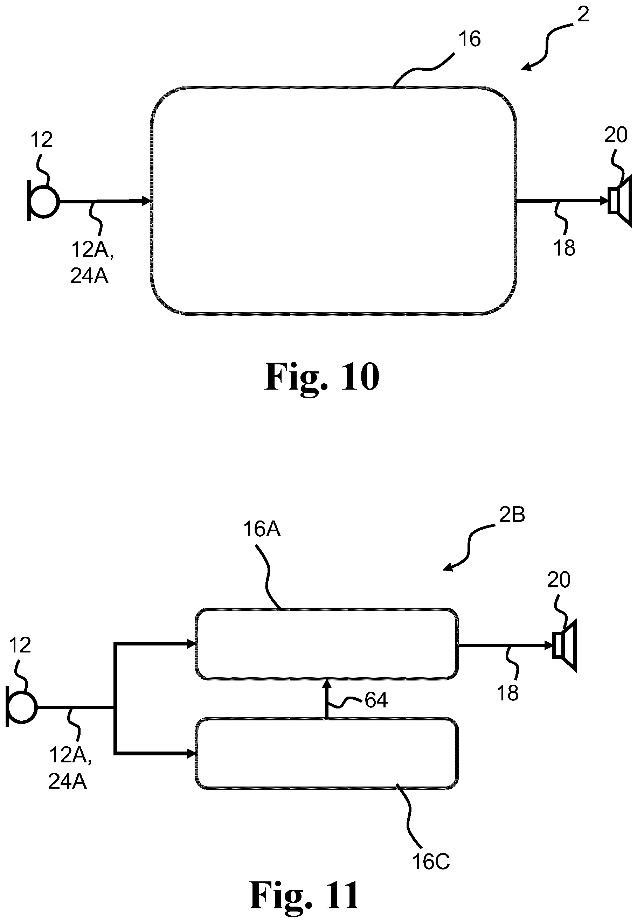

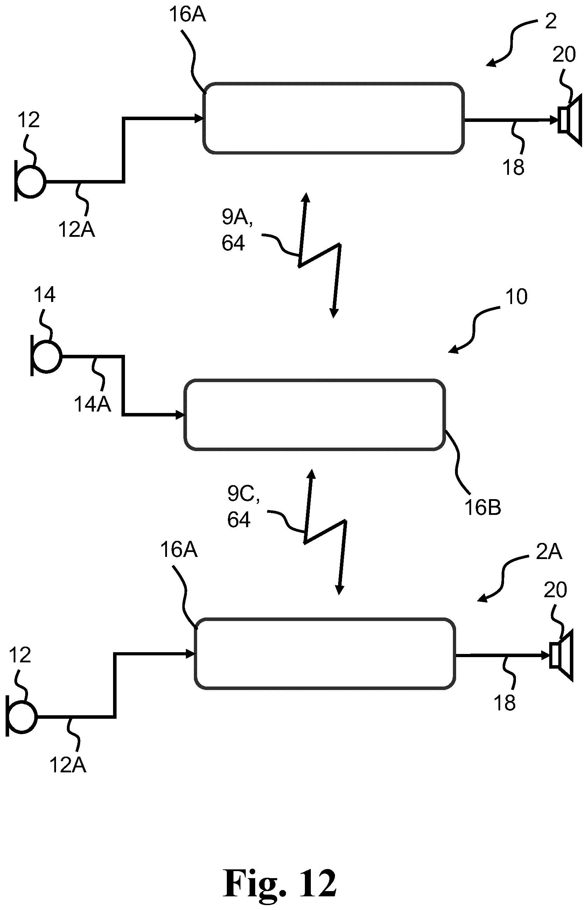

Figs. 10-12 schematically show different implementations of the present disclosure. Fig. 10 illustrates a hearing device where a (hearing device) processor 16 of the hearing device implements the functionality as shown in Fig. 2. Fig. 11 illustrates an example hearing device 2B, where blocks or modules 50, 66, 70, and 79B are implemented by hearing device processor 16A, and blocks or modules 52, 58, and 62 are implemented by an auxiliary hearing device processor 16C, the auxiliary hearing device processor 16C transmitting the noise estimate 64 to the hearing device processor 16A. Fig. 12 illustrates an example hearing system, where blocks or modules 50, 66, 70, and 79B are implemented by hearing device processor 16A of hearing device 2, and blocks or modules 52, 58, and 62 are implemented by an accessory device processor 16B of accessory device 10, the accessory device 10/accessory device processor 16B transmitting the noise estimate 64 to the hearing device 2/hearing device processor 16A, e.g. via wireless Bluetooth such as Bluetooth Low Energy. The hearing system of Fig. 12 optionally comprises hearing device 2A. In other words, the hearing system is a binaural hearing system. The accessory device 10/accessory device processor 16B may transmit the noise estimate 64 to the hearing device 2A via wireless connection 9C. In another example, the noise estimate is transmitted from the hearing device 2 to the hearing device 2A via wireless connection 9B illustrated in Fig. 4.

Fig. 13 shows an example implementation with a hearing device processor 16A and an accessory device processor 16B respectively configured to process a transducer input comprising a first transducer input 12A of transducer input and a second transducer input 14A of transducer input. The second output 60 including second output magnitude 60A is transmitted from accessory device to hearing device via wireless transceivers/transceiver modules in hearing device and accessory device (not shown).

Also disclosed are hearing devices, hearing systems, and methods according to any of the following items

Item 1. A hearing device comprising:

a set of input transducers for provision of a transducer input, the set of input transducers comprising a first input transducer for provision of a first transducer input signal, wherein the transducer input is based on the first transducer input signal;

a processor configured to process the transducer input and provide an electrical output signal based on the transducer input; and

a receiver for converting the electrical output signal to an audio output signal,

wherein to process the transducer input comprises to:

process the transducer input for provision of a first input and a second input;

apply a neural network to the second input for provision of a second output being a signal that is a prediction of future noise;

provide a noise estimate based on the second output; and

subtract the noise estimate from a first input magnitude of the first input for provision of a first output,

wherein to provide the electrical output signal is based on the first output.

Item 2. Hearing device according to Item 1, wherein to provide the electrical output signal based on the first output comprises to postprocess the first output for provision of the electrical output signal.

Item 3. Hearing device according to Item 2, wherein to postprocess the first output comprises to determine a first primary output, wherein to determine a first primary output comprises to determine a first primary output magnitude and combine the first primary output magnitude with a first input phase of the first input for provision of the first primary output, wherein to provide the electrical output signal is based on the first primary output.

Item 4. Hearing device according to Item 3, wherein to determine a first primary output magnitude comprises to remove negative values from the first output.

Item 5. Hearing device according to any one of Items 3-4, wherein to postprocess the first output comprises to apply inverse FFT to the first primary output for provision of output samples, wherein to provide the electrical output signal is based on the output samples.

Item 6. Hearing device according to Item 5, wherein to postprocess the first output comprises to truncate the output samples, e.g. by discarding M-N output samples in the output buffer, for example such that the number of output samples correspond to the number N of first samples in the first input buffer.

Item 7. According to Item 6, wherein discarding M-N output samples comprises discarding the output samples corresponding to the locations of zeros added to the first input buffer in the zero-padding.

Item 8. Hearing device according to any one of Items 6-7, wherein to postprocess the first output comprises to apply overlap-add synthesis to the truncated output samples, e.g. to suppress error and/or distortion.

Item 9. Hearing device according to any one of Items 1-8, wherein to process the transducer input for provision of a first input and a second input comprises to accumulate the transducer input in a first buffer with a first buffer size, and to accumulate the transducer input in a second buffer with a second buffer size, wherein the first buffer size is smaller than the second buffer size.

Item 10. Hearing device according to any one of Items 1-9, wherein to process the transducer input for provision of a first input and a second input comprises to extract the first input magnitude and a first input phase based on the transducer input.

Item 11. Hearing device according to any one of Items 1-10, wherein to process the transducer input for provision of a first input and a second input comprises to determine a second input magnitude based on the transducer input, wherein the second input is based on the second input magnitude.

12. Hearing device according to Item 11, wherein to process the transducer input for provision of a first input and a second input comprises to normalize the second input magnitude for provision of the second input.

13. Hearing device according to any one of Items 1-12, wherein the second output comprises a second output magnitude and to process the transducer input comprises to postprocess the second output magnitude for provision of the noise estimate.

Item 14. Hearing device according to Item 13, wherein to postprocess the second output magnitude comprises to normalise the second output magnitude for provision of a second primary output, and to provide the noise estimate based on the second primary output.

Item 15. Hearing device according to any one of Items 1-14, wherein to process the transducer input for provision of a first input and a second input comprises to accumulate the transducer input in a first buffer, zero-pad the first buffer to provide a first intermediate buffer based on the first buffer, apply a first FFT to the first intermediate buffer, and provide the first input magnitude based on the output of the first FFT.

Item 16. Hearing device according to any one of Items 1-15, wherein to process the transducer input for provision of a first input and a second input comprises to accumulate the transducer input in a second buffer; apply a second FFT to the second buffer, and provide the second input based on the output of the second FFT.

Item 17. A method of operating a hearing system comprising a hearing device, the method comprising:

obtaining a transducer input;

processing the transducer input for provision of an electrical output signal based on the transducer input; and

converting the electrical output signal to an audio output signal,

wherein processing the transducer input comprises to:

processing a first transducer input of the transducer input for provision of a first input;

processing a second transducer input of the transducer input for provision of a second input;

applying a neural network to the second input for provision of a second output being a signal that is a prediction of future noise;

providing a noise estimate based on the second output;

subtracting the noise estimate from a first input magnitude of the first input for provision of a first output; and

providing the electrical output signal based on the first output.

Item 18. Hearing system comprising a hearing device and an accessory device, the hearing system comprising a plurality of processors comprising a hearing processor of the hearing device and an accessory processor of the accessory device, wherein the plurality of processors are configured to:

obtain a transducer input;

process the transducer input for provision of an electrical output signal based on the transducer input; and

convert the electrical output signal to an audio output signal,

wherein to process the transducer input comprises to:

process a first transducer input of the transducer input for provision of a first input;

process a second transducer input of the transducer input for provision of a second input;

apply a neural network to the second input for provision of a second output being a signal that is a prediction of future noise;

provide a noise estimate based on the second output;

subtract the noise estimate from a first input magnitude of the first input for provision of a first output; and

provide the electrical output signal based on the first output.

The use of the terms "first", "second", "third" and "fourth", "primary", "secondary", "tertiary" etc. Does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of', "associated with", "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

LIST OF REFERENCES

1, 1A computer-implemented method for training a neural network
2, 2A, 2B hearing device
4 transceiver module
4A transceiver input
6 antenna
8 transceiver
9A, 9B, 9C wireless connection
10 accessory device
12 first transducer, first microphone
12A first transducer input
14 second transducer
14A second transducer input
16 processor
16A hearing device processor
16B accessory device processor
16C auxiliary hearing device processor
18 electrical output signal
20 receiver
22 audio output signal
24 pre-processor
24A transducer input
26 memory
28 data
50 first processing

52 second processing
54 first input
54A first input magnitude
54B first input phase
56 second input
56A second input magnitude
56B second input phase
56C normalised second input magnitude
58 neural network
60 second output being a signal that is a prediction of future noise
60A second output magnitude
62 noise estimator
64 noise estimate
66 subtractor
68 first output
69 first primary output
70 first post-processor
72 magnitude determiner
72A first primary output magnitude
74 combiner
76 negative value removal
78 frequency-to-time converter
78A output samples
79A overlap-add architecture
79B output buffer
80 first buffer
82 second buffer
84 zero padding
86 first time-to-frequency converter
88 second time-to-frequency converter
90 first magnitude and/or phase extractor
92 second magnitude and/or phase extractor
94 second primary normaliser
96 second secondary normaliser
96A second primary output/normalised second output magnitude
98A first average
98AA second primary average
98B second averager
98BB second secondary average
100 coefficient determiner
100A normalisation coefficients
102 determiner
110 neural network
112 input layer
112A weights of input layer
112B input layer output
113 input layer weights
114 hidden layer, first hidden layer
114A hidden layer input
114B hidden layer output
115 hidden layer weights
116 output layer
118 first feedback element
118A first feedback input
118B first feedback output
120 second feedback element

120A second feedback input
120B second feedback output
122 third feedback element
122A third feedback input
122B third feedback output
200 method of operating a hearing device
S102 obtaining transducer input
S104 processing the transducer input
S104A processing the transducer input for provision of a first input and/or a second input
S104B applying a neural network to the second input for provision of a second output being a signal that is a prediction of future noise
S104C providing a noise estimate based on the second output
S104D subtracting the noise estimate from a first input magnitude of the first input for provision of a first output
S104E obtaining a noise estimate
S106 providing an electrical output signal based on the network output
S108 converting the electrical output signal
S110 transmitting the electrical output signal
S202 obtaining a first batch of training data comprising pointers to training data pair locations of training data pairs
S204 obtaining a master neural network
S204A initializing weights of the master neural network
204B Update apply i'th weights in master network NN_i
S206 replicating instances of the master neural network for provision of first intermediate neural networks corresponding to the first batch of training data
S208 performing sequential training
S208A performing, based on the first batch of training data, first sequential training with a plurality of training rounds for provision of second trained weights
S208B performing first training round on first weights of each of the first intermediate neural networks for provision of second intermediate weights
S208C performing a second training round of each of the first intermediate neural networks for provision of third intermediate weights based on the second intermediate weights, wherein the second trained weights are based on the third intermediate weights
S209 determining average second trained weights based on the second trained weights,
S210 determining neural network
S212 output neural network
S213 obtaining TBD_2
S214 incrementing index i
S216 obtaining i'th batch of training data comprising pointers to training data pair locations of training data pairs
S220 set index p
S222

## Claims

1. A computer-implemented method for training a neural network to process as input audio data comprising a plurality of audio magnitude samples, each audio magnitude sample having a plurality of channels obtained from a microphone of a hearing device or an accessory device, and provide as output a prediction of a future noise, wherein the method comprises:

   obtaining a first batch of training data comprising pointers to training data pair locations of training data pairs;
   obtaining a master neural network, obtaining the master network comprising initializing weights of the master neural network;
   replicating instances of the master neural network for provision of first intermediate neural networks corresponding to the first batch of training data;
   performing, based on the first batch of training data, first sequential training with a plurality of training rounds for provision of first trained weights, the plurality of training rounds including a first training round on first weights of each of the first intermediate neural networks for provision of first intermediate weights and a second training round of each of the first intermediate neural networks for provision of second intermediate weights based on the first intermediate weights, wherein the first trained weights are based on the second intermediate weights;
   determining average first trained weights based on the first trained weights; and
   determining the neural network based on the average first trained weights.

2. Method according to claim 1, wherein performing the first training round on first weights of each of the first intermediate neural networks for provision of first intermediate weights comprises:

   determining first gradients for each of the first intermediate neural networks;
   scaling the first gradients for provision of scaled first gradients; and
   applying the scaled first gradients to the first weights for provision of the first intermediate weights.

3. Method according to any one of claims 1-2, wherein performing the second training round of each of the first intermediate neural networks for provision of second intermediate weights comprises:

   updating each of the first intermediate neural networks with the first intermediate weights;

   determining second gradients for each of the updated first intermediate neural networks;
   scaling the second gradients for provision of scaled second gradients; and
   applying the scaled second gradients to the first intermediate weights for provision of the second intermediate weights.

4. Method according to any one of claims 1-3, wherein performing, based on the first training data, a first sequential training comprises performing at least five training rounds.

5. Method according to any one of the preceding claims, the method comprising:

   providing second intermediate neural networks with second weights based on the average first trained weigths;
   obtaining a second batch of training data comprising pointers to training data pair locations of training data pairs;
   performing, based on the second batch of training data, second sequential training with a plurality of training rounds for provision of second trained weights, the plurality of training rounds including a first training round on second weights of each of the second intermediate neural networks for provision of first intermediate weights and a second training round on the second intermediate neural networks for provision of second intermediate weights based on the first intermediate weights, wherein the second trained weights are based on the second intermediate weights; and
   determining average second trained weights based on the second trained weights,

   wherein determining the neural network based on the average first trained weights comprises determining the neural network based on the average second trained weights.

6. Method according to any one of claims 1-5, wherein the number of first intermediate neural networks is at least 20.

7. A hearing device comprising:

   a set of input transducers for provision of a transducer input, the set of input transducers comprising a first input transducer for provision of a first transducer input signal, wherein the transducer input is based on the first transducer input signal;
   a processor configured to process the transducer input and provide an electrical output signal based on the transducer input; and

a receiver for converting the electrical output signal to an audio output signal,
wherein to process the transducer input comprises to:

> process the transducer input for provision of a first input and a second input;
> apply a neural network to the second input for provision of a second output being a signal that is a prediction of future noise, wherein the neural network is a neural network trained by a method according to any one of claims 1-6;
> provide a noise estimate based on the second output; and
> subtract the noise estimate from a first input magnitude of the first input for provision of a first output,

> wherein to provide the electrical output signal is based on the first output.

8. Hearing device according to claim 7, wherein to provide the electrical output signal based on the first output comprises to postprocess the first output for provision of the electrical output signal.

9. Hearing device according to claim 8, wherein to postprocess the first output comprises to determine a first primary output, wherein to determine a first primary output comprises to determine a first primary output magnitude and combine the first primary output magnitude with a first input phase of the first input for provision of the first primary output, wherein to provide the electrical output signal is based on the first primary output.

10. Hearing device according to any one of claims 7-9, wherein to process the transducer input for provision of a first input and a second input comprises to determine a second input magnitude based on the transducer input, wherein the second input is based on the second input magnitude.

11. Hearing device according to claim 10, wherein to process the transducer input for provision of a first input and a second input comprises to normalize the second input magnitude for provision of the second input.

12. Hearing device according to any one of claims 7-11, wherein the second output comprises a second output magnitude and to process the transducer input comprises to postprocess the second output magnitude for provision of the noise estimate, and wherein to postprocess the second output magnitude comprises to normalise the second output magnitude for provision of a second primary output, and to provide the noise estimate based on the second primary output.

13. Hearing device according to any one of claims 7-12, wherein to process the transducer input for provision of a first input and a second input comprises to accumulate the transducer input in a second buffer; apply a second FFT to the second buffer, and provide the second input based on the output of the second FFT.

14. A method of operating a hearing system comprising a hearing device, the method comprising:

> obtaining a transducer input;
> processing the transducer input for provision of an electrical output signal based on the transducer input; and
> converting the electrical output signal to an audio output signal,

> wherein processing the transducer input comprises to:

> processing a first transducer input of the transducer input for provision of a first input;
> processing a second transducer input of the transducer input for provision of a second input;
> applying a neural network to the second input for provision of a second output being a signal that is a prediction of future noise, wherein the neural network is a neural network trained by a method according to any one of claims 1-6;
> providing a noise estimate based on the second output;
> subtracting the noise estimate from a first input magnitude of the first input for provision of a first output; and
> providing the electrical output signal based on the first output.

15. Hearing system comprising a hearing device and an accessory device, the hearing system comprising a plurality of processors comprising a hearing processor of the hearing device and an accessory processor of the accessory device, wherein the plurality of processors are configured to:

> obtain a transducer input;
> process the transducer input for provision of an electrical output signal based on the transducer input; and
> convert the electrical output signal to an audio output signal,

> wherein to process the transducer input comprises to:

process a first transducer input of the transducer input for provision of a first input;

process a second transducer input of the transducer input for provision of a second input;

apply a neural network to the second input for provision of a second output being a signal that is a prediction of future noise, wherein the neural network is a neural network trained by a method according to any one of claims 1-6;

provide a noise estimate based on the second output;

subtract the noise estimate from a first input magnitude of the first input for provision of a first output; and

provide the electrical output signal based on the first output.

1

S202 Obtain BTD_1

S204 Obtain master
NN

S204A    S204B

S213 Obtain
further BTD

S206 Replicate master
NN to M_1 I_NN1s

S208 Perform sequential training

S208A

S208B

S208C

S209 Determine average trained weights

S210 Determine NN

S212 Output NN

# Fig. 1

S202
Set i=1 and Obtain BTD_i

1A

S204 Obtain MNN_i

S204A    S204B

S216
Obtain BTD_i

S206 Replicate MNN_i to
M_i l_NN_i's

S214
i=i+1

S208 Perform i'th sequential training

S208A

S208B    S208C

S209 Determine average trained weights

S210 Determine NN

NO

Done?

S210A

YES

S210B

S212 Output NN

# Fig. 2

S208

```
┌─────────────────────────┐
│   S220 Set p=1          │
└─────────────────────────┘
           │
           ▼
┌─────────────────────────┐          ┌──────────────┐
│   S221 Set INI_W_p      │◄─────────│   S230       │
└─────────────────────────┘          │   p=p+1      │
           │                         └──────────────┘
           ▼                                 ▲
┌─────────────────────────────────┐          │
│  S222 Determine p'th gradients  │          │
│                                 │          │
│   ┌ ─ ─ ─ ─ ┐  ┌ ─ ─ ─ ─ ┐     │          │
│   │ S204A   │  │ S204B   │     │          │
│   └ ─ ─ ─ ─ ┘  └ ─ ─ ─ ─ ┘     │          │
└─────────────────────────────────┘          │
           │                                 │
           ▼                                 │
┌─────────────────────────────────┐          │
│   S224 Scale p'th gradients     │          │
│                                 │          │
│                                 │          │
│                                 │          │
└─────────────────────────────────┘          │
           │                                 │
           ▼                                 │
┌─────────────────────────────────┐          │
│   S226 Apply scaled gradients   │          │
└─────────────────────────────────┘          │
           │                                 │
           ▼                          NO     │
      S228  ◇─────────────────────────────────┘
        p=NTR_SQT ?
           │
          YES
           ▼
┌─────────────────────────────────┐
│  S232 Output intermediate       │
│  weights as trained weights     │
└─────────────────────────────────┘
```

**Fig. 3**

**Fig. 4**

**Fig. 5**

100

S102 Obtaining transducer input

S104 Processing the transducer input

S104A

S104C

S104B

S104D

S104E

S106 Providing an electrical output signal

S108 Converting the electrical output signal

S110 Transmitting the electrical output signal

## Fig. 6

Fig. 7

**Fig. 8**

**Fig. 9**

**Fig. 10**

**Fig. 11**

**Fig. 12**

**Fig. 13**

Europäisches
Patentamt
European
Patent Office
Office européen
des brevets

## EUROPEAN SEARCH REPORT

**Application Number**

EP 24 18 7188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 551 083 B2 (SOUNDHOUND INC [US]) 10 January 2023 (2023-01-10) | 1-4,6 | INV.<br>G10L21/0216 |
| A | * column 1, lines 6-9 *<br>* column 10, line 15 - column 15, line 11 *<br>* column 22, line 30 - column 29, line 23 *<br>* figures 1,5 * | 5 | G10L15/06<br>G10L25/30 |
| X | LI-WEI CHEN ET AL: "A Teacher-student Framework for Unsupervised Speech Enhancement Using Noise Remixing Training and Two-stage Inference",<br>ARXIV.ORG, CORNELL UNIVERSITY LIBRARY, 201 OLIN LIBRARY CORNELL UNIVERSITY ITHACA, NY 14853,<br>27 October 2022 (2022-10-27), XP091355256, | 1 | |
| A | * the whole document * | 5 | |
| A | CN 118 197 274 A (QINGDAO HAIER WASHING ELECTRIC APPLIANCE CO LTD ET AL.) 14 June 2024 (2024-06-14)<br>* paragraph [0028] - paragraph [0052] * | 1-15 | **TECHNICAL FIELDS SEARCHED (IPC)**<br><br>G10L<br>H04S |
| X | US 11 647 344 B2 (BRITISH CAYMAN ISLANDS INTELLIGO TECH INC [KY]) 9 May 2023 (2023-05-09) | 7-15 | H04R |
| A | * column 3, line 35 - column 5, line 21 * | 1-6 | |

The present search report has been drawn up for all claims

| Place of search | Date of completion of the search | Examiner |
|---|---|---|
| The Hague | 27 November 2024 | De Ceulaer, Bart |

EPO FORM 1503 03.82 (P04C01)

## ANNEX TO THE EUROPEAN SEARCH REPORT
## ON EUROPEAN PATENT APPLICATION NO.

EP 24 18 7188

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | | Publication date | Patent family member(s) | | Publication date |
|---|---|---|---|---|---|
| US 11551083 | B2 | 10-01-2023 | NONE | | |
| CN 118197274 | A | 14-06-2024 | NONE | | |
| US 11647344 | B2 | 09-05-2023 | TW | 202241147 A | 16-10-2022 |
| | | | US | 2022329953 A1 | 13-10-2022 |

EPO FORM P0459

For more details about this annex : see Official Journal of the European Patent Office, No. 12/82